# EUROPÄISCHE PATENTSCHRIFT

(11) **EP 3 538 348 B1**
(45) Veröffentlichungstag und Bekanntmachung des Hinweises auf die Patenterteilung: **20.01.2021**
(21) Anmeldenummer: 17807691.5
(22) Anmeldetag: 08.11.2017
(51) Int. Cl.: B29C 64/165, B33Y 10/00, B33Y 70/00

(54) **VERFAHREN UND VORRICHTUNG ZUM HERSTELLEN VON 3D-FORMTEILEN MIT TAUCHBESCHICHTUNGSVORGANG**
METHOD AND DEVICE FOR PRODUCING 3D SHAPED ARTICLES, INCLUDING DIP COATING STEP
PROCÉDÉ ET DISPOSITIF DE FABRICATION DE PIÈCES MOULÉES EN 3D PAR UN PROCÉDÉ D'ENDUCTION PAR TREMPAGE

(30) Priorität: 09.11.2016 DE 102016013262
(43) Veröffentlichungstag der Anmeldung: 18.09.2019
(73) Patentinhaber: Voxeljet AG, 86316 Friedberg (DE)
(72) Erfinder: GÜNTHER, Daniel, 81371 München (DE); SINZINGER, Martin, 86316 Friedberg (DE)
(74) Vertreter: Helbig, Christian
(86) Internationale Anmeldenummer: PCT/DE2017/000374
(87) Internationale Veröffentlichungsnummer: WO 2018/086645

(56) Entgegenhaltungen:
- WO-A1-97/45249
- WO-A1-98/56566

## Beschreibung

Die vorliegende Erfindung betrifft eine Vorrichtung und ein Verfahren geeignet zum Einsatz bei 3D-Druckverfahren mit einem Tauchbeschichtungsvorgang.

In der europäischen Patentschrift EP 0 431 924 B1 wird ein Verfahren zur Herstellung dreidimensionaler Objekte (Formteile, 3D-Formteil, Bauteil) aus Computerdaten beschrieben. Dabei wird ein Partikelmaterial in einer dünnen Schicht auf eine Plattform aufgetragen und dieses selektiv mittels eines Druckkopfes mit einem Bindermaterial bedruckt. Der mit dem Binder bedruckte Partikelbereich verklebt und verfestigt sich unter dem Einfluss des Binders und gegebenenfalls eines zusätzlichen Härters. Anschließend wird die Plattform um eine Schichtdicke in einen Bauzylinder abgesenkt und mit einer neuen Schicht Partikelmaterial versehen, die ebenfalls, wie oben beschrieben, bedruckt wird. Diese Schritte werden wiederholt, bis eine gewisse, erwünschte Höhe des Objektes erreicht ist. Aus den bedruckten und verfestigten Bereichen entsteht so ein dreidimensionales Objekt.

Dieses aus verfestigtem Partikelmaterial hergestellte Objekt ist nach seiner Fertigstellung in losem Partikelmaterial eingebettet und wird anschließend davon befreit. Dies erfolgt beispielsweise mittels eines Saugers. Übrig bleiben danach die gewünschten Objekte, die dann vom Restpulver z.B. durch Abbürsten befreit werden.

Pulver mit einer bestimmten Kornfeinheit haben für eine Verarbeitung in 3D-Druckgeräten an Luft meist zu schlechte Fließeigenschaften. Durch die relativ zur Korngröße starken Kräfte zwischen den Körnern haften die Körner stark aneinander und es ergibt sich ein Pulver das nicht frei fließt. Solche Pulver sind nicht prozesssicher verarbeitbar. Eine Abhilfe kann es sein die Partikel in einer Flüssigkeit zu verarbeiten. Damit können z.B. elektrostatische Wechselwirkungen stark reduziert werden.

Die DE 44 17 083 A1 beschreibt eine Stereolithographievorrichtung, bei der flüssiges Polymermaterial aufgetragen wird, das selektiv mittels elektromagnetischer Strahlung verfestigt wird. Dieses Polymermaterial kann beispielsweise auch keramische Partikel in hohen Konzentrationen enthalten.

Beim Stereolithographieverfahren wird eine extrem hochviskose Suspension verwendet. Diese Suspension neigt kaum dazu zu Sedimentieren also innerhalb der Flüssigkeitssäule verschiedene Partikeldichten auszubilden. Die Suspension ist meist stark thixotropiert, um bei hohen Scherraten trotzdem zu einer dünnen Schicht ausgebreitet werden zu können. Diese hohen Viskositäten stellen eine starke Einschränkung der nutzbaren Materialsysteme dar. So sind beispielsweise keramische Systeme meist wasserbasiert und die gebrauchsfertige Suspension ist extrem niedrig viskos. Eine hohe Viskosität stellt zudem eine Einschränkung der möglichen Prozessgeschwindigkeit dar.

Bei der Stereolithographie handelt es sich zudem um ein grundsätzlich anderes 3D-Druckverfahren als das erfindungsgemäße Verfahren, das ein pulver-basiertes 3D-Druckverfarhen mit selektivem Bindereintrag betrifft. Eine erfindungsgemäße Vorrichtung und Verfahren werden also in der Schrift DE 44 17 083 A1 weder offenbart noch nahe gelegt.

Die WO2012/164078A2 offenbart ein 3D-Druckverfahren mit Schlickerauftrag für hauptsächlich wässrige Suspensionen. Dieses 3D-Druckverfahren mit selektivem Bindereintrag weist allerdings verschiedene Nachteile und Probleme gegenüber der vorliegenden Erfindung auf. Eine erfindungsgemäße Vorrichtung und Verfahren werden hierin weder offenbart noch nahe gelegt.

Dieses Verfahren nutzt eine Hohlrakel, durch die Schlicker gepumpt wird und durch die im gleichen Schritt die Schicht glattgestrichen wird. Die Pumpe pumpt permanent, auch wenn die Rakel nicht im Arbeitsgang ist, Schlicker durch die Rakel. Dafür wird ein Kreislaufsystem realisiert, das außerhalb des Baufeldes den Schlicker aus der Rakel über eine Rinne aufnimmt und wieder dem Reservoir mit der Pumpe zuführt. Dieser Mechanismus ist aufwändig.

Eine Schwierigkeit bei bekannten 3D-Druckverfahren, die Schlicker oder in Suspension vorliegende Partikelmaterialien verwenden, ist es die Homogenität des in Suspension aufgetragenen Partikelmaterials zu gewährleisten und somit über das Baufeld gesehen eine gleichmäßige Dichte und Partikelverteilung auszubilden. Die Homogenisierungsfunktion übernimmt bei den Verfahren des Standes der Technik das Kreislaufsystem mit der Pumpe. Dies führt zu einem erhöhten Verschleiß, einem komplexen Mechanismus und zu einem wenig wünschenswerten Energieverbrauch, da der Schlicker vergleichsweise weit gepumpt werden muss.

Es war deshalb eine Aufgabe der vorliegenden Erfindung konstruktive Mittel bereitzustellen, die ein verbessertes 3D-Druckverfahren erlauben oder zumindest die Nachteile des Standes der Technik zu verbessern oder ganz zu vermeiden.

Es war weiterhin eine Aufgabe ein 3D-Druckverfahren bereit zu stellen mit dem eine größere Materialvielfalt zur Anwendung kommen kann oder/und Materialien eingesetzt werden können, die bisher nicht oder nur mit Schwierigkeiten oder Nachteilen verwendet werden können. Das Dokument WO 97/45249 offenbart eine Vorrichtung nach dem Oberbegriff des Anspruchs 1 und ein Verfahren nach dem Oberbegriff des Anspruchs 6.

### Kurze Zusammenfassung der Erfindung

In einem Aspekt betrifft die Erfindung eine Vorrichtung für 3D-Druckverfahren, die einen Tauchbeschichtungsvorgang durch ein Schlickerreservoir außerhalb eines Baubereiches ermöglicht.

In einem weiteren Aspekt kann ein Beschichter zum Überfahren und Aufbringen von Partikelmaterial entfallen.

In einem weiteren Aspekt betrifft die Erfindung ein 3D-Druckverfahren, bei dem die einzelnen Partikelschichten durch ein sequenzielles Absenken und anheben der Bauplattform und einem optionalen Nivelliervorgang erfolgt.

### Kurze Beschreibung der Figuren

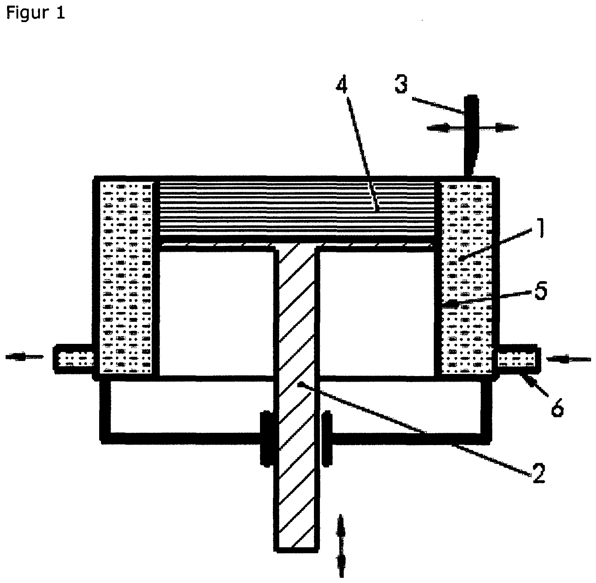

**Fig. 1** zeigt eine Schnittzeichnung einer bevorzugten Ausführungsform der Erfindung von der Seite mit innerer Behälterwand. Abstreifer 3 ist in seitlicher Position, die Bauplattform mit Kinematik 2 und darauf bereits verfestigtem Partikelmaterial (Schichtverbund) ist dargestellt. 6 stellt einen Anschluss für Umlaufspülung dar und 5 zeigt die innen liegende Wand als eine Seite des Behälters für die Suspension (Flüssigkeitsgefüllter Behälter). Der Doppelpfeil beschreibt die Verfahrrichtung der Bauplattform.

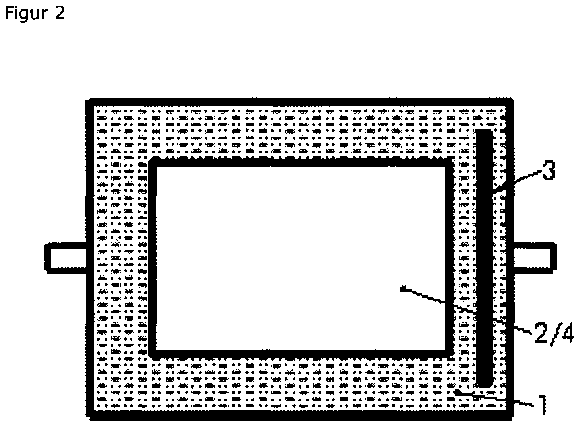

**Fig. 2** zeigt eine Draufsicht einer bevorzugten Ausführungsform der Erfindung von oben mit innerer Behälterwand. Die Plattform (Bauplattform) 2 ist von einem Suspensionsreservoir 1 umgeben. Eine Kalibriereinheit (Kalibriervorrichtung) oder Rakel 3 ist rechts dargestellt. Diese ist verfahrbar über die Bauplattform.

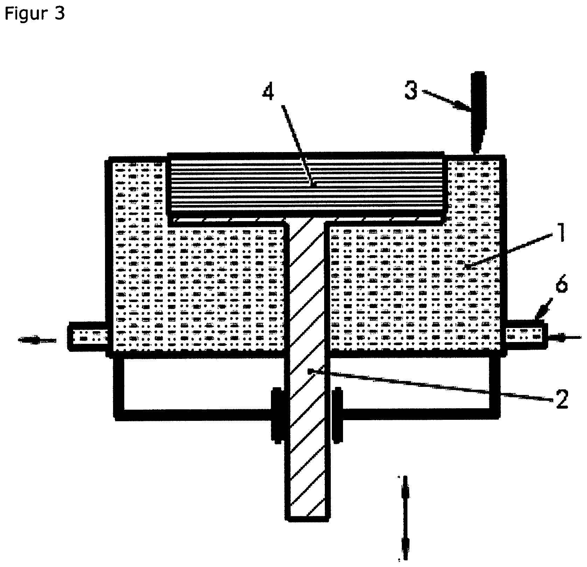

**Fig. 3** beschreibt eine Schnittzeichnung einer bevorzugten Ausführungsform der Erfindung ohne innerer Behälterwand. Die Bauplattform 2 ist mit Kinematik ausgestaltet. Es wurden bereits mehrere Schichten an Partikelmaterial aufgebracht und selektiv verfestigt 4. Der Flüssigkeitsbehälter 1 weist einen Anschluss 6 für eine Umlaufspülung auf, die dazu beiträgt, dass die Suspension eine gleichmäßige Partikelverteilung beibehält. Über Anschluss 6 oder einen anderen Anschluss kann in einer weiteren Variante auch die Partikelkonzentration reguliert werden, der z.B. mit einem Reservoir an Suspension verbunden ist und z.B. ein Ventil und Steuerelemente aufweist, um eine Zumischung an unterschiedlichen Konzentrationen von Suspension zu erreichen, um so die Partikelkonzentration der verwendeten Suspension konstant zu halten, zu vermindern oder zu erhöhen. Abstreifer oder Rakel 3 ist seitlich dargestellt. Die Bauplattform ist in einer oberen Position nach dem Absenken und Fluten der Bauplattform mit aufgebrachtem verfestigten Partikelmaterial 4 und vor dem Überfahren des Abstreifers 3. Es befindet sich also eine noch nicht verfestigte Partikelschicht auf der vorherigen bereits verfestigten Partikelschicht. Im nächsten Schritt verfährt der Abstreifer 3 über die abgesetzte Partikelschicht und erreicht so eine zusätzliche gleichmäßige Verteilung über die Oberfläche des Partikelmaterials. Danach kann der selektive Bindereintrag über einen Druckkopf (nicht dargestellt) erfolgen und so das 3D-Formteil in seiner nächsten Schicht hergestellt werden. In dieser Ausführungsform ist die Bauplattform und die Verfahreinheit von Suspension umgeben.

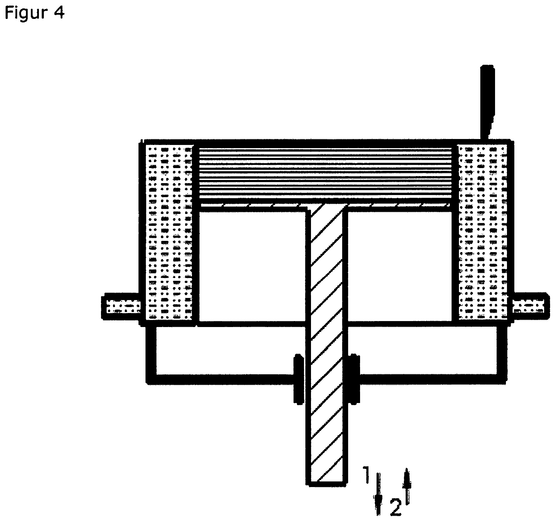

**Fig. 4** stellt das Absenken in Pfeilrichtung und Anheben in Pfeilrichtung der Plattform zum Schichtauftrag dar. Beim Absenken läuft die Suspension auf die bereits selektiv verfestigte Pulverschicht und flutet diese. Durch das Anheben läuft die Suspension bzw. die Flüssigkeit der Suspension zurück in den Behälter 1 und eine Partikelschicht setzt sich auf der letzten selektiv verfestigten Partikelschicht auf der Bauplattform ab. Diese ist entweder bereits so aufgebaut, dass eine selektive Verfestigung nach Bindereintrag erfolgen kann oder Abstreifer oder Rakel 3 wird über ihr verfahren.

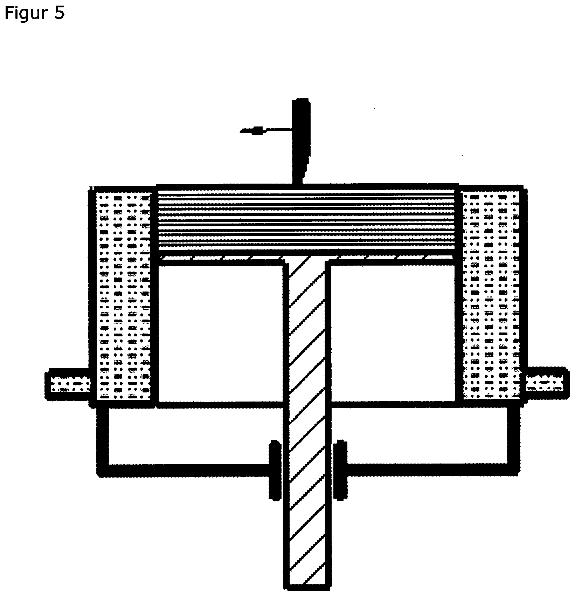

**Fig. 5** zeigt das Kalibrieren der Schichtdicke durch einen Abstreifer oder Rakel 3, der sich wie dargestellt mittig über der Bauplattform befindet, wobei er die Bauplattform bei dem Herstellungsverfahren gänzlich überfährt.

### Ausführliche Beschreibung der Erfindung

Erfindungsgemäß wird die der Anmeldung zu Grunde liegenden Aufgabe durch einen Gegenstand gemäß Anspruch 1 und 6 gelöst.

Im Folgenden werden zunächst einige Begriffe der Erfindung näher erläutert.

"3D-Formteil", "Formkörper" oder "Bauteil" im Sinne der Erfindung sind alles mittels des erfindungsgemäßen Verfahrens oder/und der erfindungsgemäßen Vorrichtung hergestellte dreidimensionale Objekte, die eine Formfestigkeit aufweisen.

"Bauraum" ist der geometrische Ort in dem die Partikelmaterialschüttung während des Bauprozesses durch wiederholtes Beschichten mit Partikelmaterial wächst oder durch den die Schüttung bei kontinuierlichen Prinzipien durchläuft. Im Allgemeinen wird der Bauraum durch einen Boden, die Bauplattform, durch Wände und eine offene Deckfläche, die Bauebene, begrenzt.

Als "Partikelmaterialien" oder "Partikel" oder "partikelförmige Baumaterialien" oder "Baumaterialien" können alle für den Pulver-basierten 3D Druck bekannten Materialien verwendet werden, insbesondere Polymere, Keramiken und Metalle. Das Partikelmaterial ist vorzugsweise ein trocken frei fließendes Pulver, es kann aber auch ein kohäsives schnittfestes Pulver oder eine partikelbeladene Flüssigkeit verwendet werden. In dieser Schrift werden Partikelmaterial und Pulver synonym verwendet.

Der "Partikelmaterialauftrag" ist der Vorgang bei dem eine definierte Schicht aus Pulver erzeugt wird. Dies kann entweder auf der Bauplattform oder auf einer geneigten Ebene relativ zu einem Förderband bei kontinuierlichen Prinzipen erfolgen. Der Partikelmaterialauftrag wird im Weiteren auch "Beschichtung" oder "Recoaten" genannt.

"Selektiver Flüssigkeitsauftrag" kann im Sinne der Erfindung nach jedem Partikelmaterialauftrag erfolgen oder je nach den Erfordernissen des Formkörpers und zur Optimierung der Formkörperherstellung auch unregelmäßig, beispielsweise mehrfach bezogen auf einen Partikelmaterialauftrag, erfolgen. Dabei wird ein Schnittbild durch den gewünschten Körper aufgedruckt.

Unter "3D-Druckvorrichtung" zum Durchführen des erfindungsgemäßen Verfahrens sind 3D-Druckvorrichtung zu verstehen, die die zum 3D-Druck üblicherweise erforderlichen Bauteile beinhaltet. Übliche Komponenten sind bspw. Beschichter (Recoater), Baufeld, Mittel zum Verfahren des Baufeldes oder anderer Bauteile bei kontinuierlichen Verfahren, Dosiervorrichtungen und Wärme- und Bestrahlungsmittel und andere dem Fachmann bekannte Bauteile, die deshalb hier nicht näher ausgeführt werden.

Das Baumaterial wird immer in einer "definierten Schicht" oder "Schichtstärke" aufgebracht, die je nach Baumaterial und Verfahrensbedingungen individuell eingestellt wird. Sie beträgt beispielsweise 0,05 bis 0,5 mm, vorzugsweise 0,1 bis 0,3 mm. Die Güte der Schicht und das Sollmaß können durch ein Nivellierelement gezielt beeinflusst werden.

"Pulverkuchen" im Sinne der Erfindung ist die mittels Beschichter hergestellte dreidimensionale Form, in der die 3D-Formteile selektiv verfestigt werden oder sind und der die Gesamtheit von selektiv verfestigtem und Pulvervolumen einschließt.

Im Sinne der Erfindung sind "für eine selektive Verfestigung geeignete Stoffe" alle für einen pulver-basierten 3D-Druck geeignete Stoffe, die auch als Binder bezeichnet werden, und nach selektivem Auftragen auf das Partikelmaterial zu einer selektiven Verfestigung desselben führen. Ebenso können Materialien verwendet werden, die gewisse Eigenschaften des Pulverkuchens beeinflussen, beispielweise die Wasserlöslichkeit. Hierbei kann es sich handeln um bspw. Lösemittel für einen im Pulverkuchen vorhandenen Feststoffkleber, wie etwa Polymere (z.B. PMMA, PVA, PVB, PS), Bindemittel, die über Zwei- Komponentenreaktionen aushärten (z.B. Epoxydharz, Polyurethane), Bindemittel die über externe Mechanismen aushärtbar sind, wie UV-Harze oder thermisch härtbare Kompositionen, Öle die die Wasserbenetzbarkeit verändern.

Als "Kalibriervorrichtung" oder Kalibriermittel" wird bspw. ein "Abstreifer" oder eine "Rakel" verwendet, die in unterschiedlichen Materialien ausgestaltet sein kann. Hierbei sind metallische Klingen ebenso wie keramische oder Kunststoffklingen geeignet. Ebenso sind Gummiwischer geeignet. Die Klingen können als einfache Platten oder scharfkantig ausgebildet sein. Durch eine Winkelstellung der Klinge können die Scherbedingungen in der Suspension gezielt beeinflusst werden.

In der "Suspension" befinden sich die Partikelmaterialien zum Aufbau der einzelnen Schichten und schließlich des Pulverkuchens. Die Flüssigkeit der Suspension kann aus organischen, nicht-wässrigen oder wässrigen Flüssigkeiten bestehen oder sie umfassen. Sie kann unterschiedliche Partikelmaterialien eines oder mehrerer Materialien beinhalten. Bevorzugt ist eine wasserbasierte Suspension. Als Partikelmaterialien können bspw. verwendet werden, die ausgewählt sind aus der Gruppe bestehend aus Keramik, Kunststoff, Metall, Holz oder/und Sand oder ähnlichen.

Die "Konzentration" in der Suspension wird individuell gewählt und nach den weiteren Verfahrensbedingungen eingestellt. Die "Konzentration" der Partikelmaterialien in der Suspension liegt bspw. bei 30% gew.. Ebenso ist es aber möglich dünnere und dichtere Suspensionen zu verarbeiten. Werden zusätzlich erfindungsgemäß Rührwerke eingesetzt können auch instabile Suspensionen verarbeitet werden.

Die "Beladung der Suspension" mit Partikelmaterial kann unterschiedlich gewählt werden und auch im Laufe des Verfahrens und des Aufbaus des 3D-Formteils variiert werden.

"Trockenmittel" sind Vorrichtungsbestandteile, die dazu verwendet werden eine neu aufgelegte Schicht zumindest teilweise von der Suspensionsflüssigkeit zu trocknen. Geeignete Trockenmittel können beispielsweise Wärmestrahler, Heißluftgebläse oder Ventilatoren sein. Die Aspekte der Erfindung werden im Folgenden näher beschrieben.

Die Erfindung betrifft in einem Aspekt eine Vorrichtung zum Herstellen von 3D-Formteilen, die umfasst eine Bauebene zum Aufbringen von Baumaterial, Mittel zum selektiven Auftragen von für eine selektive Verfestigung geeigneten Stoffen, Mittel zum Aufbringen von Baumaterial als Suspension auf die Bauebene, dadurch gekennzeichnet, dass das Aufbringen der Suspension durch eine Folge von Absenken und Anheben der Bauplattform erfolgt.

Die Verfahren des Standes der Technik weisen einen Beschichter mit Zufuhr von Suspension auf. Dieser Zufuhrmechanismus ist technisch aufwändig. Es muss eine abrasionsbeständige Pumpe zum Einsatz kommen, die die Suspension zum Beschichter fördert. Da der Beschichter nicht immer im Eingriff mit der Baufläche steht, neigt dieser zum Austrocken. Eine sichere Funktion kann nur erzielt werden, wenn der Beschichter außerhalb des Baufeldes immer mit Suspension durchspült wird. Ein solches Kreislaufsystem ist aufwändig und anfällig für Fehlfunktionen.

Mit der erfindungsgemäßen Vorrichtung können staubfeine Materialien nunmehr mit einer wesentlich vereinfachten Vorrichtung verarbeitet werden. Diese Vorrichtung steigert die Zuverlässigkeit des Schichtauftrages maßgeblich. Dadurch wird ebenso das Spektrum der nutzbaren Basismaterialien vergrößert.

Erfindungsgemäß werden Reservoire eingesetzt, die durch einfache Mechanismen gerührt werden können und ermöglichen so den einfachen Einsatz eigentlich instabiler Suspensionen.

Durch den Einsatz von einem komplett um den Bauraum laufenden Reservoir kann ein in sich geschlossenes System aufgebaut werden, dass die Verschmutzungen durch Suspension in der Vorrichtung gering hält.

Bei Einsatz einer Rakel kann die Vorrichtung derart ausgestaltet werden, dass kein Austrocknen der Rakel auftreten kann.

In einer bevorzugten Ausführungsform weist die Vorrichtung ein Kalibriermittel auf. Als Kalibriermittel kann jedes geeignete Mittel verwendet werden, das das Einstellen einer gleichmäßigen Schichtdicke des Partikelmaterials unterstützt. Besonders bevorzugt ist das Kalibriermittel ein Abstreifer. Der Abstreifer wird dazu über das Baufeld geführt. Wird die Bewegung bei jeder Schicht gleich ausgeführt, bestimmt der Abstreifer die Parallelität der einzelnen Schichten.

Grundsätzlich können alle Partikelmaterialien zur Herstellung der Partikelschicht und zum Aufbau des 3D-Formteils verwendet werden, die sich selektiv mit einem Bindermaterial verbinden lassen. Diese werden als Suspension aufgebracht. In einem speziellen Aspekt erfolgt die Aufbringung des Partikelmaterials durch Sedimentation der in der Suspension enthaltenen Partikel begünstigt durch einen Trockschritt. Die Präzision der Partikelschichtdicke kann mit z.B. einem Mittel zum Glätten der Partikelschicht wie einem Abstreifer erhöht werden. Die Schichtdicke beim erfindungsgemäßen Verfahren ohne Abstreifer ist in hohem Maße von den Fließeigenschaften der Suspension und Saugverhalten bereits gebauter Schichten abhängig. Ebenso ist die Parallelität der einzelnen Schichten nicht gegeben und somit ergibt sich ein schwer zu steuernder Prozessverlauf. Durch eine Rakel oder einen Abstreifer werden exakt parallele Schichten möglich.

Die Schicht kann auch durch Überlaufkanten und Anregung des Pulverkuchens durch Vibrationen kalibriert werden. Dabei läuft überschüssiges Material auf dem Baufeld über die Kanten zurück in das Suspensionsreservoir und das Material auf dem Baufeld glättet sich.

Durch Auswahl des Partikelmaterials, der Konzentration der Partikelmaterialien in der Suspension bzw. durch die Einstellung der Beladung der Suspension wird die Zusammensetzung, Dichte der Packung und/oder die Materialeigenschaften in jeder Partikelschicht und letztendlich in dem fertiggestellten 3D-Formteil bestimmt.

In einem weiteren Aspekt der Erfindung wird in der Vorrichtung eine Suspension eingebracht, die als Flüssigkeit eine nicht-wässrige oder wässrige Flüssigkeit enthält und als Feststoff Partikel enthält, die ausgewählt sind aus der Gruppe bestehend aus Keramik, Kunststoff, Metall, Holz oder/und Sand, wobei vorzugsweise die Partikel einen mittleren Durchmesser von 0,05 bis 50µm haben.

In der Vorrichtung kann die Viskosität in der Suspension, die aufgebracht wird, vorzugsweise eingestellt werden. Die Suspension hat beim Auftrag vorzugsweise eine Viskosität von 1 mPas bis 1000 mPas. Die Suspension kann sich dabei annährend wie eine newtonsche Flüssigkeit verhalten. Ebenso sind aber scherratenempfindliche Suspensionen verarbeitbar. Dies kann beim Einsatz eines Abstreifers oder einer Rakel von Vorteil sein, da die Suspension im Randbereich wenig fließt und folglich stehen bleibt, auf dem Baufeld aber sicher in einer definierten Schicht aufgebracht werden kann.

Es können auch Trocknungsmittel vorgesehen sein, um die erzeugte Schicht nach den Vorgängen Absenken, Anheben und Kalibrieren zumindest teilweise zu trocknen.

Die Vorrichtung enthält eine Bauebene, auf der die Suspension aufgebracht wird. Vorzugsweise ist die Bauebene in einem Behälter angeordnet, der mit einer Suspension beschickbar ist. Besonders bevorzugt ist der Behälter eine Jobbox, die ausgewechselt werden kann. Auf diese Weise kann die Auslastung der Maschine gesteigert werden, da während des Auspackens der Bauteile die Maschine eine andere Box bearbeiten kann.

Die Erfindung kann verschiedene Varianten der Suspensionsaufbringung verwirklichen. Eine Möglichkeit stellt eine Vorrichtung dar, bei der an wenigstens einer Seite der Bauebene ein Suspensionsreservoir angeordnet ist. Wahlweise kann an zwei, drei oder vier Seiten der Bauebene ein Suspensionsreservoir angeordnet sein. Die Suspension wird dann vorzugsweise über ein Zuführmittel, einer Rakel,auf die Bauebene aufgebracht.

Es können sich seitlich Überlaufrinnen oder -tanks befinden, die die Suspension aufnehmen können. Weiterhin weist die Vorrichtung Mittel auf, die in der Suspension eine gleichmäßige Partikelbeladung sicherstellen. Dies können z.B. Vibrationselemente, Rührwerke oder ein Schlauchsystem mit Verbindung zu einer externen Kammer und Pumpe sein, mittels der die Suspension zirkuliert wird, um eine gleichmäßige Beladung bzw. Konzentration von Partikelmaterial in der Suspension zu gewährleisten.

In einem weiteren Aspekt weist die Vorrichtung insbesondere bei einer derartigen Ausgestaltung Mittel zum Einstellen der Schichtdicke auf. Die Rakel oder der Abstreifer startet mit einer zur Bauplattform im wesentlichen parallelen Bewegung im Bereich des Suspensionstanks. Im Moment des Starts der Bewegung wird der Füllstand im Suspensionstank gezielt soweit angehoben, dass die Flüssigkeit über den Tankrand und das Baufeld hinaussteht. Die Rakel taucht jetzt ein. Startet die Bewegung wird Suspension vor der Rakel hergeschoben. Damit wird sie auf das Baufeld aufgebracht und gleichzeitig wird die neue Schicht geglättet
Es hat sich gezeigt, dass es bei einer derartigen Ausgestaltung vorteilhaft ist, wenn die Vorrichtung Mittel zum Aufrechterhalten der Homogenität der Suspension aufweist. Ein mögliches Bespiel ist ein Rührer im Suspensionstank.

Auch können Mittel vorgesehen sein, die zum Einstellen der Konzentration der Suspension dienen. Hierzu muss die Viskosität der Viskosität laufen geprüft werden. Anhand der Messwerte kann Flüssigkeit zu dosiert werden, um z.B. Verluste durch Abdampfen auszugleichen.

Die Vorrichtung kann aber auch ohne ein separates Suspensionsreservoir zum wiederholten Auftragen ausgestaltet sein. Die Suspension und die Bauplattform befinden sich in einer Kammer, die als eine Wanne ausgebildet ist. Diese Kammer kann eine spezielle Jobbox sein. Die Kammer ist in dieser Ausführungsform derart ausgestaltet, dass sie im wesentlichen dicht ist und die Suspension in ihr verbleiben kann. Die Bauebene ist dann entweder direkt in dieser Kammer angeordnet, die mit Suspension gefüllt ist oder eine Trennwand umgibt die Bauebene und deren Hebemittel. In jedem Fall erfolgt die Partikelmaterialaufbringung über ein Fluten der Bauebene (Absenken) mit der Suspension und anschließendes Anheben (Hochfahren) der Bauebene, wodurch die Flüssigkeit der Suspension abfließt und sich die neue Partikelschicht auf der Bauebene ausbildet. Dieser Prozess kann durch die Verwendung einer Rakel oder eines Abstreifers unterstützt werden. Ebenso kann diese Rakel wieder dazu dienen die Parallelität der einzelnen Schichten sicherzustellen.

In dieser Ausführungsform wird der Schichtauftrag wie folgt durchgeführt: Der Füllstand der Kammer wird mit Suspension auf eine Zielhöhe gebracht. Der Schichtauftrag erfolgt durch abwechselndes Hochfahren aus der bzw. Absenken der Bauplattform in die Suspension. Dazwischen wird die Schicht durch ein Trockenmittel zumindest teilweise getrocknet und der selektive Verfestigungsvorgang mit selektivem Bindereintrag vorgenommen. Die Schritte wechseln sich ab. Bei jedem Absenken wird das Baufeld soweit abgesenkt, dass die Suspension das Baufeld mit den bereits verfestigten Schichten überdecken kann; es wird also geflutet. Danach wird das Baufeld angehoben und eine Partikelschicht kann sich darauf absetzen, die dann wieder selektiv mit Binder bedruckt wird und somit selektiv verfestigt wird. Diese Schritte werden wiederholt bis der Druckvorgang abgeschlossen ist.

Die Vorrichtung kann auch einen Druckkopf zum selektiven Verändern von Eigenschaften in bestimmten Bereichen aufweisen.

In einem weiteren Aspekt ist die Erfindung ein Verfahren zum Herstellen von 3D-Formteilen mittels 3D-Druckverfahren, wobei Baumaterial als Suspension schichtweise auf eine Bauebene aufgebracht wird, das so aufgebrachte Baumaterial mit geeigneten Mitteln selektiv verfestigt wird, dadurch gekennzeichnet, dass die Suspension durch eine Folge von Absenken und Anheben der Bauplattform aufgebracht wird.

Die Schichtdicke kann individuell eingestellt werden und kann bei jedem Druckzyklus gleich gewählt werden oder unterschiedlich eingestellt werden je nach den Erfordernissen und den anderen Verfahrensbedingungen. Je nach spezieller Ausgestaltung des Verfahrens wird ein Kalibriermittel verwendet, vorzugsweise ist das Kalibriermittel ein Abstreifer, der dabei hilft die Schichtdicke der Partikelschicht zu definieren.

In der Suspension können als Partikelmaterialien alle für den 3D-Druck einsetzbaren und mit den anderen Verfahrensbedingungen und verwendeten Materialien wie Binder etc. kompatiblen Materialien zum Einsatz kommen. Als Suspension wird eine Suspension verwendet, die als Flüssigkeit eine nicht-wässrige oder wässrige Flüssigkeit enthält und als Feststoff Partikel enthält, die ausgewählt sind aus der Gruppe bestehend aus Keramik, Kunststoff, Metall, Holz oder/und Sand, wobei vorzugsweise die Partikel einen mittleren Durchmesser von 0,05 bis 50µm haben.

Die Suspension kann dabei eine Ausgangsviskosität von 1 bis 10000 mPas aufweisen oder die Viskosität wird beim Auftragen auf das Baufeld auf einen Wert von 1 bis 1000 mPas eingestellt. Thixotrope Eigenschaften sind ähnlich wie Newtonsche für das Verfahren von Vorteil.

Bei dem Verfahren wird eine Bauebene verwendet, auf der der Pulverkuchen aufgebaut wird und die selektiven Verfestigungsschritte durchgeführt werden. Die Bauebene kann in einem Behälter angeordnet werden, der mit einer Suspension beschickbar ist, vorzugsweise wird als Behälter eine Jobbox verwendet. Vorzugsweise wird die Suspension aus ein, zwei, drei oder vier an den Seiten der Bauebene angeordneten Suspensionsreservoirs zugeführt.

Die Schichtdicke der aufgebrachten Partikel wird mit in der Vorrichtung enthaltenen Mitteln eingestellt. Weiterhin hat es sich als vorteilhaft herausgestellt, wenn die Homogenität oder/und die Konzentration der Suspension mit in der Vorrichtung enthaltenen Mitteln eingestellt werden

Ebenso kennzeichnend für das Verfahren ist ein Trocknungsschritt. Jede Schicht wird nach dem Aufbringen und vor dem selektiven Verfestigen zumindest teilweise getrocknet. Dazu sind in der Vorrichtung Trockenmittel vorhanden. Dies können Wärmestrahler oder Heißluftgebläse sein. Ebenso kann die Suspension durch einen Unterdruck an der Bauplattform getrocknet oder entwässert werden.

In einem weiteren Aspekt des Verfahrens kann die Schicht mit einem Binder bedruckt werden, der die Löslichkeit oder/und die Benetzbarkeit der bedruckten Bereiche gegenüber der Suspensionsflüssigkeit herabsetzt. Auch kann die erzeugte Schicht nach den Vorgängen Absenken, Anheben und Kalibrieren zumindest teilweise getrocknet werden.

Mit der oben dargestellten erfindungsgemäßen Vorrichtung und dem Verfahren konnten überraschender Weise sehr vorteilhafte Verfahrensergebnisse erreicht werden. Es können auch Materialien eingesetzt werden, die bisher nicht in dieser Art Verwendung finden konnten, z.B. Partikel mit kleinen Korngrößen oder Staub.

Mit der erfindungsgemäßen Vorrichtung und Verfahren werden die oben ausgeführten Probleme oder Nachteile zumindest vermindert oder ganz vermieden.

### Beispiele

Die Erfindung wird anhand eines beispielhaften Verfahrensablaufes veranschaulicht, der nicht beschränkend zu verstehen ist:
Wie andere 3D-Druckverfahren, wird auch das erfindungsgemäße Verfahren in einer Abfolge von gleichen oder vorgangsgemäß ähnlichen Einzelschritten realisiert. Das eigentliche Verfahren ist dabei in einen Fertigungsablauf eingebettet der aus der Jobvorbereitung, dem Druckverfahren, dem Entpacken und dem Nachbehandeln der Bauteile besteht. Viele Schritte des erfindungsgemäßen Verfahrens sind dem 3D-Druckverfahren ähnlich und manche weichen stark ab. Die Schritte und die Abweichungen werden im Folgenden erklärt.

Bei der Jobvorbereitung werden zuerst alle Verbrauchsmaterialien aufgefüllt oder ersetzt. Im Fall des hier beschriebenen Verfahrens wird kein Partikelmaterial verwendet. Das Nachfüllen erfolgt über ein Auffüllen des Schlickers oder der Suspension aus einem Kanister. Je nach Ausführung der Vorrichtung erfolgt dieses Nachfüllen direkt in das Reservoir oder den Baubehälter. Ist der Baubehälter als Wechselbehälter ausgeführt kann das Material außerhalb der Vorrichtung nachgefüllt werden.

Auch kann die Suspension über Kanister in die Vorrichtung eingebracht werden. Diese müssen je nach Stabilität der Suspension vorher ausgeschüttelt werden um die Suspension zu homogenisieren und ein Absetzen zu verhindern.

Nach dem Auffüllen ist je nach Ausführung das Reservoir oder der Baubehälter gefüllt. Aufgrund von Handhabungseigenschaften ist es hilfreich, dass der Behälter nur bis zu einem gewissen Niveau gefüllt wird. Der Rest wird über eine Pumpe mit Füllstandsensor gefüllt um ein exaktes Level im Reservoir oder im Baubehälter zu erreichen. Das Niveau der Suspensionsoberfläche ist dann reproduzierbar gegenüber der Baufläche.

Ebenso werden im Schritt der Jobvorbereitung die Druckflüssigkeiten nachgefüllt. Diese werden meist als Kartuschen in die Vorrichtung eingesetzt und enthalten die für das Verfahren notwendigen Flüssigkeiten. Wird ein Tintenstrahldruckkopf eingesetzt müssen diese Flüssigkeiten die Anforderungen des Druckkopfes erfüllen. Diese sind meist eine beschränkte Viskosität, Oberflächenspannung, Dampfdruck und Partikelbeladung.

Enthält die Vorrichtung einen Wechselbehälter, wird dieser vor dem eigentlichen Start in die Vorrichtung eingesetzt. In der Vorrichtung wird, wie von anderen Verfahren bekannt, der Behälter gegen unzulässiges Verschieben in der Vorrichtung gesichert.

Die Bauplattform kann durch einen Durchgriff im Wechselbehälter mit dem Achssystem der Maschine verbunden sein. Der Durchgriff muss entsprechend der Flüssigkeit dicht und abrasionssicher ausgeführt sein. Die Bauplattform kann aber auch von ober in den Baubehälter eingreifen. Sie wird dann aber ebenso nach dem Einbringen des Baubehälters in die Vorrichtung über eine Verriegelung mit dem Achssystem der Vorrichtung verbunden.

Wie oben dargestellt gibt es um die Bauplattform entweder direkt eine Wand, die Suspensionsreservoire definiert, oder die Bauplattform ist in einem größeren Behälter mit deutlichem Abstand der Kanten der Plattform zu Behälterwand untergebracht. Das Dichtungssystem muss jeweils entsprechend ausgeführt werden. Die erfindungsgemäße Vorrichtung bei der die Bauplattform in einem größeren Behälter angeordnet ist, kann hierbei mit einem relativ einfachen Dichtungssystem ausgeführt werden, da nur der Durchgriff abgedichtet werden muss. Im Fall einer Verbindung der Bauplattform mit dem Achssystem von oben entfallen ein Durchgriff und damit die Notwendigkeit zur Abdichtung des Systems.

Das Druckverfahren beginnt damit dass eine Grundschicht auf die Bauplattform aufgebracht werden muss. Dabei werden die Abweichungen der Parallelität der Bauplattform und der Beschichterbewegungsebene gewissermaßen mit Baumaterial verfüllt. Erst wenn die Schicht vollständig und plan ist kann mit eigentlichen bauen begonnen werden.

Das Verfüllen der Grundschicht gleicht dem Beschichtungsvorgang des eigentlichen Druckprozesses. Es wird Suspension über der Bauplattform ausgebracht, evtl. geglättet und im Anschluss teilweise getrocknet um die Grundschicht zu stabilisieren. Die Möglichkeiten, die Suspension auszubringen, werden weiter unten beschrieben.

Der Bauprozess selbst ist eine Abfolge der immer wieder wiederholten Schritte: Beschichten, Trocknen und selektives Verfestigen.

Das Beschichten erfolgt, wie schon beschrieben, durch das Ausbringen der Suspension auf der Bauplattform. Erfindungsgemäß wird das Aufbringen durch ein Absenken und gegebenenfalls ein Anheben der Bauplattform erreicht. Dabei wird die Bauplattform unter den Flüssigkeitsspiegel der Suspension abgesenkt. Diese beginnt dann in Richtung der Mitte der Bauplattform zu fließen.

Je nach Aufbau der Vorrichtung können die Strömungsgeschwindigkeit der Suspension und damit die Produktionsleistung der Vorrichtung beeinflusst werden. Wird die Vorrichtung mit einem Behälter deutlich größer als die Bauplattform ausgeführt, kann durch tiefes Absenken die Strömung beschleunigt werden. Nach dem Treffen der Suspension in der Mitte der Bauplattform kann diese auf die gewünschte Position verfahren werden und so die gewünschte Schichtstärke eingestellt werden.

Bei einer Vorrichtung mit innerer Wand, also mit Suspensionsreservoiren ist diese Form der Flutung nicht möglich. Die innere Wand muss hierbei, um eine Funktion zu erfüllen, immer ungefähr eine Schichtstärke unterhalb des Flüssigkeitsspiegels liegen. Wird die Bauplattform abgesenkt, verfüllt sie sich verhältnismäßig langsam.

Bei einer Vorrichtung dieses Typs ist es hilfreich mit einer Rakel den Beschichtungsvorgang zu beschleunigen. Die Rakel steht vor dem Beschichtungsvorgang auf einer Startposition im Bereich des Suspensionsreservoirs. Die Bauplattform wird abgesenkt und die Rakel wird über das Baufeld geführt. Durch den Kontakt zur Flüssigkeit wird einen Welle aus Suspension vor der Rakel hergeschoben. Diese verfüllt das Baufeld und durch die Rakel wird das Ergebnis zudem geglättet.

Um Material vor die Rakel zu bringen, sind verschiedene Schritte denkbar. Zum einen kann die Rakel während des Verfahrens über dem Suspensionsreservoir kurzfristig tiefer gestellt werden. Damit wird mehr Suspension mitgenommen. Ebenso ist aber möglich das Suspensionsreservoir anzuheben. Auch ist es möglich den Flüssigkeitsspiegel lokal, vor der Rakel zu beeinflussen. Hierzu können im Reservoir Pumpenauslässe oder Schrauben lokal Drücke erzeugen, die vor der Rakel eine Wellen bilden.

Während des Laufes der Rakel wird vor der Rakel Material hergeschoben. Im Bereich des Baufeldes wird dieses Material verbraucht, es läuft also unter die Rakel. Dabei strömt aber ebenso Material senkrecht zur Bewegungsrichtung ab. Dieses Material muss von der Vorrichtung durch seitliche Rinnen aufgenommen werden. Je nach Einstellung ergibt sich zudem ein Überschuss der hinter dem Baufeld in eine weitere Rinne abgeführt werden muss.

Die Rinnen können gemäß der zu erwartenden Flüssigkeitsmengen dimensioniert werden. Ebenso können aber die Rinnen auch als Reservoire ausgeführt sein. Im Falle der Rinne am Ende des Baufeldes kann die Ausführung als Reservoir zu einer symmetrischen Anordnung in der Vorrichtung führen. Dies ermöglicht es die Rakel jeweils ohne eine Leerfahrt während des Beschichtens zu bewegen. Sie startet dann an dem Ort, an dem sie nach der letzten Beschichterfahrt gestanden war.

Um das Bedrucken im nachfolgenden Schritt zu ermöglichen, muss die Schicht zumindest teilweise getrocknet werden. Zumindest teilweise bedeutet bei diesem Verfahren, dass die durch einen Tintenstrahldruckkopf eingedruckte Tinte mindestens durch das Porenvolumen der darunterliegenden Schicht aufgenommen werden kann. Wäre kein Porenvolumen vorhanden, würde die Tinte auf der Schicht erhaben sein und den nächsten Beschichtungsprozess stören.

Die Trocknung der Schicht kann über unterschiedliche Methoden erreicht werden. Zum einen kann durch den bereits erzeugten Pulverkuchen Flüssigkeit abgesaugt werden. Das Partikelmaterial im der Suspension wirkt dabei als Filter auf dem sich das Partikelmaterial der neuen Schicht abscheidet.

Bei hohen Dichten im Pulverkuchen ist die Trocknungswirkung durch Absaugen von unten gering. Hier ist es besser die Schicht von oben durch Abdampfen von Suspensionsflüssigkeit zu trocknen. Dieses Abdampfen kann durch Wärmeeinwirkung und Luftzirkulation gezielt beeinflusst werden. In erfindungsgemäßen Vorrichtungen bewähren sich IR-Strahler zur Erwärmung, Ventilator zum Abtransport der feuchten Luft, aber auch Lufterhitzer in Kombination mit Gebläsen, die heiße Luft auf das Baufeld blasen.

Die Trocknungswirkung wird bei den beschriebenen Vorrichtungen durch ein wiederbefeuchten der Schicht in Kontakt mit dem Suspensionsreservoir teilweise rückgängig gemacht. Hierbei ist eine Vorrichtung, die einen getrennten Raum für die Bauplattform und das Suspensionsreservoir vorsieht, wesentlich leichter zu beherrschen. Die Rückbefeuchtungswirkung kann nur über den Spalt stattfinden der über den inneren Wänden im Bereich der Bauplattform liegt.

Eine Vorrichtung mit Suspensionsbehälter, in dem die Bauplattform offen bewegt wird, muss mit weiteren Maßnahmen im Baubereich trocken gehalten werden. Da die Flüssigkeit zum bereits erzeugten Pulverkuchen Zugang hat, muss dieser Zugang durch prozesstechnische Maßnahmen verhindert werden. Dies kann z.B. durch Eindrucken einer, je nach Suspensionsflüssigkeit, z.B. hydrophoben Tinte erfolgen. Jede Schicht wird hierzu mit einem Rahmen bedruckt, der in der Schichtfolge eine Art Mauer darstellt. Dadurch wird der seitliche Zutritt verhindert. Eine Beschichtung von oben ist nach wie vor möglich.

Das Bedrucken kann mit verschiedenen Medien erfolgen. Ziel der Wirkung ist jeweils den Nachfolgenden Schritt nach dem Produktionsprozess zu ermöglichen: Das Entpacken der Bauteile. Dabei muss der Pulverkuchen vom Bauteil abgewaschen werden. Für diesen Vorgang muss das Bauteil ausreichende Festigkeit und Lösemittelbeständigkeit aufweisen.

Die Festigkeit kann alleine durch den Zusammenhalt der feinen Partikel in der Suspension erzielt werden. Ist diese Festigkeit für eine Handhabung ausreichend, muss die Tinte nur die Löseeigenschaften des Pulverkuchens ändern.

Beispielsweise könnte die Suspension wasserbasiert sein und feine Keramikpartikel enthalten. Wir diese Suspension getrocknet entsteht ein fester gut handhabbarer Pulverkuchen, der prinzipiell wieder wasserlöslich ist. Lediglich die Ort die beim Druckprozess mit einer Tinte beispielweise ölbasierten bedruckt wurden, sind nicht mehr wasserlöslich. Damit kann die gedruckte Form durch waschen im Wasserbad zum Vorschein gebracht werden. Dieses sogenannte Grünteil kann dann im Anschluss in einem Keramischen Brand zu einem dichten Keramikbauteil gebrannt werden.

Eine weitere Möglichkeit ist es ein verfestigendes Material einzudrucken. Hierbei sind alle erdenklichen für 3D-Druckverfahren bekannten Bindesysteme geeignet. Z.B. kann in der Suspension ein Initiator für ein acrylatisches Tintensystem vorhanden sein, das bei Raumtemperatur nach dem Zusammentreffen von Tinte und Initiator härtet. Ebenso ist es auch möglich ein Zwei- Komponentensystem zu verwenden. Eine Komponente kann hierbei ebenso in der Suspension sein. Es können aber auch mehrere Druckköpfe zum Einsatz kommen. Ein Beispiel für ein solches System könnte Epoxidharz oder Polyurethanharz sein.

Ebenso ist es möglich einen Feststoffkleber in der Suspension einzumischen. Dieser wird dann über den Druckkopf, z.B. in Form eines Lösemittels, aktiviert und verfestigt den Pulverkuchen unter Änderung der Löseeigenschaften.

Im Anschluss an das Drucken erfolgt wieder ein Beschichten, das wie schon beschrieben, implizit ein Absenken der Bauplattform um eine Schichtstärke enthält. Die Schritte Beschichten, Trocknen, Bedrucken und Schichtabsenken werden solange hintereinander ausgeführt, bis alle gewünschten Körper im Baubehälter erzeugt sind.

Nach dem Bauen kann der Pulverkuchen aus der Vorrichtung entnommen werden. Dies kann entweder in der herausnehmbaren Box erfolgen oder der Pulverkuchen wird als Ganzes der Vorrichtung entnommen.

Jetzt können die Bauteile vom Pulverkuchen getrennt werden. Verfahrensgemäß wird dazu der Pulverkuchen abgewaschen. Je nach Materialsystem wird ein Lösemittel ausgewählt das den Pulverkuchen auflöst, die Bauteile aber nicht. Besonders bevorzugt werden Systeme bei denen Wasser zum Auswaschen der Bauteile verwendet werden kann. Damit ist die Handhabung besonders einfach. Ebenso einfach gestaltet sich das Wiederverwenden des Partikelmaterials. Dazu wird das Waschwasser gesammelt und die Eigenschaften der Suspension werden wieder eingestellt. Damit kann der Prozesslauf von vorne beginnen.

### Bezugszeichenliste

1. Flüssigkeitsgefüllter Behälter/Kammer
2. Plattform (Bauplattform, Bauebene) mit Kinematik
3. Kalibriervorrichtung (z.B. Abstreifer oder Rakel)
4. Bereits verfestigter Schichtverbund
5. Innenliegende Wand des Flüssigkeitsbehälter (zur Abtrennung der Bauplattform und Hebemittel)
6. Anschluss für Umlaufspülung

## Patentansprüche

1. Vorrichtung zum Herstellen von 3D-Formteilen, die eine Bauplattform (2) mit einer eine Bauebene zum Aufbringen von Baumaterial, Mittel zum selektiven Auftragen von für eine selektive Verfestigung geeigneten Stoffen, Mittel zum Aufbringen von Baumaterial als Suspension auf die Bauebene umfasst, wobei die Vorrichtung Steuerungsmittel aufweist, die so eingerichtet sind, dass das schichtweise Aufbringen der Suspension durch eine Folge von Absenken, Anheben der Bauplattform erfolgt, **dadurch gekennzeichnet, dass** die Vorrichtung einen Druckkopf zum selektiven Verändern von Eigenschaften in bestimmten Bereichen aufweist.

2. Vorrichtung zum Herstellen von 3D-Formteilen nach Anspruch 1, **dadurch**
**gekennzeichnet, dass** die Vorrichtung ein Kalibriermittel (3) aufweist oder/und
**dadurch gekennzeichnet, dass** das Kalibriermittel ein Abstreifer ist oder/und
**dadurch gekennzeichnet, dass** ein Trocknungsmittel vorgesehen ist, um die erzeugte Schicht nach den Vorgängen Absenken,
Anheben und Kalibrieren zumindest teilweise zu trocknen oder/und
**dadurch gekennzeichnet, dass** die Suspension als Flüssigkeit eine nicht-wässrige oder wässrige Flüssigkeit enthält und als Feststoff Partikel enthält, die ausgewählt sind aus der Gruppe bestehend aus Keramik, Kunststoff, Metall, Holz oder/und Sand, wobei vorzugsweise die Partikel einen mittleren Durchmesser von 0,05 bis 50µm haben oder/und
**dadurch gekennzeichnet, dass** die Suspension eine Viskosität von 1mPas bis 1000mPas aufweist oder/und
**dadurch gekennzeichnet, dass** die Bauebene in einem Behälter angeordnet ist, der mit einer Suspension beschickbar ist, vorzugsweise ist der Behälter eine Jobbox oder/und
**dadurch gekennzeichnet, dass** an wenigstens einer Seite der Bauebene ein Suspensionsreservoir (1) angeordnet ist oder/und
**dadurch gekennzeichnet, dass** an zwei, drei oder vier Seiten der Bauebene ein Suspensionsreservoir angeordnet ist.

3. Vorrichtung nach Anspruch 1 oder 2, **dadurch gekennzeichnet, dass** die Vorrichtung Mittel zum Einstellen der Schichtdicke aufweist, vorzugsweise das Mittel mit der Bauebene gekoppelt ist.

4. Vorrichtung nach Anspruch 1 - 3, **dadurch gekennzeichnet, dass** die Vorrichtung Mittel zum Aufrechterhalten der Homogenität der Suspension aufweist.

5. Vorrichtung nach Anspruch 1 - 4, **dadurch gekennzeichnet, dass** die Vorrichtung Mittel zum Einstellen der Konzentration der Suspension aufweist.

6. Verfahren zum Herstellen von 3D-Formteilen, wobei Baumaterial als Suspension schichtweise auf eine Bauebene feiner Bauplattform (2) aufgebracht
wird, das so aufgebrachte Baumaterial mit geeigneten Mitteln selektiv verfestigt wird, wobei die Suspension durch eine Folge von Absenken und Anheben der Bauplattform aufgebracht wird und **dadurch gekennzeichnet, dass** ein Druckkopf zum selektiven Verändern von Eigenschaften in bestimmten Bereichen verwendet wird.

7. Verfahren nach Anspruch 6, **dadurch gekennzeichnet, dass** in dem Verfahren ein Kalibriermittel (3) verwendet wird, vorzugsweise
dass das Kalibriermittel ein Abstreifer ist.

8. Verfahren nach Anspruch 6 oder 7, **dadurch gekennzeichnet, dass** die erzeugte Schicht nach den Vorgängen Absenken, Anheben und Kalibrieren zumindest teilweise getrocknet wird.

9. Verfahren nach Anspruch 6, 7 oder 8, **dadurch gekennzeichnet, dass** als Suspension eine Suspension verwendet wird, die als Flüssigkeit eine nicht-wässrige oder wässrige Flüssigkeit enthält und als Feststoff Partikel enthält, die ausgewählt sind aus der Gruppe bestehend aus Keramik, Kunststoff, Metall, Holz oder/und Sand, wobei vorzugsweise die Partikel einen mittleren Durchmesser von 0,05 bis 50µm haben.

10. Verfahren nach einem der Ansprüche 6 bis 9, **dadurch gekennzeichnet, dass** eine Suspension verwendet wird, die eine Viskosität von 1mPas bis 1000mPas aufweist oder/und **dadurch gekennzeichnet, dass** die Schicht mit einem Binder bedruckt wird, der die Löslichkeit der bedruckten Bereiche gegenüber der Suspensionsflüssigkeit herabsetzt oder/und **dadurch gekennzeichnet, dass** die Schicht mit einem Binder bedruckt wird, der die Benetzbarkeit der bedruckten Bereiche gegenüber der Suspensionsflüssigkeit herabsetzt oder/und **dadurch gekennzeichnet, dass** die Bauebene in einem Behälter angeordnet wird, der mit einer Suspension beschickbar ist, vorzugsweise wird als Behälter eine Jobbox verwendet oder/und **dadurch gekennzeichnet, dass** die Suspension aus ein, zwei, drei oder vier an den Seiten der Bauebene angeordneten Suspensionsreservoirs zugeführt wird oder/und **dadurch gekennzeichnet, dass** die Schichtdicke mit in der Vorrichtung enthaltenen Mitteln eingestellt wird oder/und **dadurch gekennzeichnet, dass** die Homogenität oder/und die Konzentration der Suspension mit in der Vorrichtung enthaltenen Mitteln eingestellt werden.

## Claims

1. A device for producing 3D moulded parts, which comprises a construction platform (2) with a construction plane for applying construction material, means for selectively applying substances suitable for selective solidification and means for applying construction material as a suspension onto the construction plane, wherein said device comprises control means which are arranged such that the layer-by-layer application of the suspension is effected by a sequence of lowering and raising of the construction platform, **characterised in that** the device has a print head for selectively changing properties in specific areas.

2. The device for producing 3D moulded parts according to claim 1, **characterised in that** said device comprises a calibrating means (3),
or/and
**characterised in that** the calibrating means is a scraper or/and **characterised in that** a drying means is provided to at least partially dry the produced layer after the lowering, lifting and calibrating processes or/and **characterised in that** the suspension contains a liquid in the form of a non-aqueous or aqueous liquid and contains a solid in the form of particles selected from the group consisting of ceramic, plastic, metal, wood or/and sand, wherein the particles preferably have an average diameter of 0.05 to 50 µm or/and **characterised in that** the suspension has a viscosity of 1mPas to 1000mPas or/and **characterised in that** the construction plane is arranged in a container which can be charged with a suspension, the container preferably being a job box, or/and **characterised in that** a suspension reservoir (1) is arranged on at least one side of the construction plane or/and
**characterised in that** a suspension reservoir is arranged on two, three or four sides of the construction plane.

3. The device according to claim 1 or 2,
**characterised in that** the device comprises means for adjusting the layer thickness, said means preferably being coupled to the construction plane.

4. The device according to claims 1 to 3,
**characterised in that** the device comprises means for maintaining the homogeneity of the suspension.

5. The device according to claims 1 to 4,
**characterised in that** the device comprises means for adjusting the concentration of the suspension.

6. A method for producing 3D moulded parts, wherein construction material is applied as a suspension in layers onto a construction plane of a construction platform (2) and the construction material applied in this way is selectively solidified by suitable means, wherein the suspension is applied by a sequence of lowering and raising the construction platform and
**characterised in that** a print head is used for selectively changing properties in specific areas.

7. The method according to claim 6,
**characterised in that** a calibration means (3) is used in the method,
preferably **in that** the calibration means is a scraper.

8. The method according to claim 6 or 7,
**characterised in that** the produced layer is at least partially dried after the lowering, lifting and calibrating processes.

9. The method according to claim 6, 7 or 8,
**characterised in that** the suspension used is a suspension which contains a liquid in the form of a non-aqueous or aqueous liquid and contains a solid in the form of particles selected from the group consisting of ceramic, plastic, metal, wood or/and sand, wherein the particles preferably have an average diameter of 0.05 to 50 µm.

10. The method according to any one of claims 6 to 9,
**characterised in that** the suspension used is a suspension having a viscosity of 1mPas to 1000mPas or/and
**characterised in that** the layer is printed with a binder which reduces the solubility of the printed areas in relation to the suspension liquid or/and **characterised in that** the layer is printed with a binder which reduces the wettability of the printed areas in relation to the suspension liquid or/and **characterised in that** the construction plane is arranged in a container which can be charged with a suspension, the container used preferably being a job box, or/and
**characterised in that** the suspension is supplied from one, two, three or four suspension reservoirs arranged on the sides of the construction plane or/and **characterised in that** the layer thickness is adjusted by means contained in the device or/and
**characterised in that** the homogeneity or/and the concentration of the suspension is adjusted by means contained in the device.

## Revendications

1. Dispositif de production de pièces 3D, comprenant une plateforme de construction (2) avec un plan de construction pour appliquer du matériau de construction, des moyens pour l'application sélective de matériaux appropriés à une solidification sélective et des moyens pour appliquer du matériau de construction sous forme d'une suspension sur la plateforme de construction, le dispositif présentant des moyens de commande qui sont disposés de telle sorte que l'application couche par couche de la suspension s'effectue par une séquence d'abaissement et de relèvement de la plateforme de construction, **caractérisé en ce que** le dispositif présente une tête d'impression pour modifier sélectivement des propriétés dans des zones spécifiques.

2. Dispositif de production de pièces 3D selon la revendication 1, **caractérisé en ce que** le dispositif comprend un moyen de calibrage (3)
ou/et
**caractérisé en ce que** le moyen de calibrage est un racleur ou/et **caractérisé en ce qu'**un moyen de séchage est prévu afin de sécher au moins partiellement la couche produite après les processus d'abaissement, de levage et de calibrage ou/et
**caractérisé en ce que** la suspension contient comme liquide un liquide non aqueux ou aqueux et contient comme solide des particules qui sont choisies dans le groupe constitué par la céramique, le plastique, le métal, le bois ou/et le sable, de préférence les particules ayant un diamètre moyen de 0,05 à 50 µm ou/et
**caractérisé en ce que** la suspension a une viscosité de 1mPas à 1000mPas ou/et
**caractérisé en ce que** le plan de construction est disposé dans un conteneur qui peut être chargé avec une suspension, le conteneur étant de préférence une boîte de travail, ou/et
**caractérisé en ce qu'**un réservoir de suspension (1) est disposé sur au moins un côté du plan de construction ou/et
**caractérisé en ce qu'**un réservoir de suspension est disposé sur deux, trois ou quatre côtés du plan de construction.

3. Dispositif selon la revendication 1 ou 2,
**caractérisé en ce que** le dispositif comprend un moyen pour régler l'épaisseur de couche, ledit moyen étant de préférence couplé au plan de construction.

4. Dispositif selon les revendications 1 à 3,
**caractérisé en ce que** le dispositif comprend des moyens pour maintenir l'homogénéité de la suspension.

5. Dispositif selon les revendications 1 à 4,
**caractérisé en ce que** le dispositif comprend des moyens pour ajuster la concentration de la suspension.

6. Procédé de fabrication de pièces moulées en 3D, dans lequel du matériau de construction est appliqué sous forme d'une suspension couche par couche sur un plan de construction d'une plateforme de construction (2) et le matériau de construction ainsi appliqué est solidifié de manière sélective par des moyens appropriés, la suspension étant appliquée par une séquence d'abaissement et d'élévation de la plateforme de construction et
**caractérisé en ce qu'**une tête d'impression est utilisée pour modifier sélectivement des propriétés dans des zones spécifiques.

7. Procédé selon la revendication 6,
**caractérisé en ce qu'**un moyen de calibrage (3) est utilisé dans la méthode, de préférence **en ce que** le moyen de calibrage est un racleur.

8. Procédé selon la revendication 6 ou 7,
**caractérisé en ce que** la couche produite est séchée au moins partiellement après les processus d'abaissement, de levage et de calibrage.

9. Procédé selon la revendication 6, 7 ou 8,
**caractérisé en ce que** l'on utilise comme suspension une suspension qui contient comme liquide un liquide non aqueux ou aqueux et contient comme solide 1 des particules qui sont choisies dans le groupe constitué par la céramique, le plastique, le métal, le bois ou/et le sable, les particules ayant de préférence un diamètre moyen de 0,05 à 50 µm.

10. Dispositif selon l'une quelconque des revendications 6 à 9,
**caractérisé en ce que** l'on utilise une suspension qui a une viscosité de 1mPas à 1000mPas ou/et
**caractérisé en ce que** la couche est imprimée avec un liant qui réduit la solubilité des zones imprimées par rapport au liquide de suspension ou/et **caractérisé en ce que** la couche est imprimée avec un liant qui réduit la mouillabilité des zones imprimées par rapport au liquide de suspension ou/et **caractérisé en ce que** le plan de construction est disposé dans un conteneur qui peut être chargé avec une suspension, le conteneur utilisé étant de préférence une boîte de travail, ou/et
**caractérisé en ce que** la suspension est alimentée par un, deux, trois ou quatre réservoirs de suspension disposés sur les côtés du plan de construction ou/et **caractérisé en ce que** l'épaisseur de couche est ajustée par des moyens contenus dans le dispositif ou/et
**caractérisé en ce que** l'homogénéité ou/et la concentration de la suspension est ajustée par des moyens contenus dans le dispositif.
